# EUROPEAN PATENT APPLICATION

(11) **EP 4 307 751 A1**
(43) Date of publication of application: **17.01.2024**
(21) Application number: 22783991.7
(22) Date of filing: 02.04.2022
(51) Int. Cl.: H04W 16/28, H04B 7/185, H04W 84/06, H04W 74/08

(54) **WIRELESS COMMUNICATION METHOD AND APPARATUS**

(30) Priority: 06.04.2021 CN 202110367965
(71) Applicant: Huawei Technologies Co., Ltd., Longgang Shenzhen, Guangdong 518129 (CN)
(72) Inventor: YANG, Ruonan, Shenzhen, Guangdong 518129 (CN); CHEN, Ying, Shenzhen, Guangdong 518129 (CN); LI, Rong, Shenzhen, Guangdong 518129 (CN); WANG, Jun, Shenzhen, Guangdong 518129 (CN); DU, Yinggang, Shenzhen, Guangdong 518129 (CN); WANG, Yu, Shenzhen, Guangdong 518129 (CN); QIAO, Yunfei, Shenzhen, Guangdong 518129 (CN)
(74) Representative: Isarpatent
(86) International application number: PCT/CN2022/085048
(87) International publication number: WO 2022/213925

(57) **Abstract**

Embodiments of this application disclose a wireless communication method and apparatus. The method includes: A satellite determines at least one piece of first information. The satellite sends at least one first signal to a terminal by using at least one first beam. The terminal receives the at least one first signal sent by the satellite by using the at least one first beam. Each first signal corresponds to one first beam, each first signal carries information about a first geographical location, and the first geographical location is a geographical location of a center point of the first beam corresponding to each first signal. The terminal determines a target beam, namely, a second beam, from the at least one first beam based on the information about the first geographical location carried in each first signal, a beamwidth of each first beam, an ephemeris of the satellite, and information about a geographical location of the terminal. The terminal sends a random access request to the satellite. The satellite receives the random access request sent by the terminal.

## Description

This application claims priority to Chinese Patent Application No. 202110367965.4, filed with the China National Intellectual Property Administration on April 6, 2021 and entitled "WIRELESS COMMUNICATION METHOD AND APPARATUS", which is incorporated herein by reference in its entirety.

### TECHNICAL FIELD

This application relates to the communication field, and in particular, to a wireless communication method and apparatus.

### BACKGROUND

A beamforming technology is assigning a specific shape and direction to an antenna radiation pattern by adjusting phases and amplitudes of a plurality of antennas, and enables energy of a radio signal to concentrate on a narrower beam, to increase a coverage area and reduce interference. Beamforming may implement beam maintenance by adjusting a direction as a terminal moves. In an asynchronous orbit satellite access network, as a satellite moves, the terminal camps on different beams as time moves.

In a terrestrial mobile communication network, a base station sends a plurality of beams in different directions as far as possible, to ensure continuous and seamless coverage of the beams, and ensure that any signal can be sent to a needed coverage area by using a narrow but high-gain beam.

Compared with the terrestrial mobile communication network, a non-terrestrial network (non-terrestrial network, NTN) such as the satellite plays an irreplaceable role in some important fields, such as space communication, aeronautical communication, maritime communication, and military communication. The satellite is used as an example. Satellite communication can implement wide-area or even global coverage by using high, medium, and low earth orbit satellites, and can provide an undifferentiated communication service for global users. The satellite communication and the terrestrial mobile communication network are combined to complement each other, to jointly constitute a sea-land-air-space integrated communication network with seamless global coverage, to meet a plurality of ubiquitous service requirements of users. This is an important development direction of future communication. The satellite communication and the terrestrial mobile communication network combine to give full play to their respective advantages and provide more comprehensive and high-quality services for the users. This is mainly reflected as follows: (1) In remote areas, on airplanes, or on ocean ships that cannot be covered by a network of the terrestrial mobile communication network, the satellite can provide an economical and reliable network service and extend the network to an area that cannot be reached by a terrestrial network. (2) The satellite can provide continuous network connections for Internet of Things devices and moving carriers such as airplanes, ships, trains, and cars. After the satellite communication and the terrestrial mobile communication network combines, a service capability of a terrestrial mobile communication network system in this aspect of (2) can be greatly enhanced. (3) The satellite has an excellent broadcast/multicast capability to provide an efficient data distribution service for a network edge and a user terminal.

However, it is different from the terrestrial mobile communication network, an excessive narrow beam is difficult to implement in an NTN system, and a delay between the terminal and an NTN network device and a delay between the terminal and a terrestrial station are large. Mobility of the NTN network device may result in a deviation of a preset beam direction. Consequently, beam maintenance is difficult.

### SUMMARY

Embodiments of this application provide a wireless communication method and apparatus, to reduce difficulty in beam maintenance in an NTN system.

According to a first aspect, an embodiment of this application provides a wireless communication method. The method is applied to a terminal side, and the method includes:
receiving at least one first signal sent by a satellite by using at least one first beam, where each first signal corresponds to one first beam, each first signal carries information about a first geographical location, and the first geographical location is a geographical location of a center point of the first beam corresponding to each first signal;
determining a second beam from the at least one first beam based on the information about the first geographical location carried in each first signal, a beamwidth of each first beam, an ephemeris of the satellite, and information about a second geographical location, where the second geographical location is a geographical location of the terminal; and
sending a random access request to the satellite. The random access request carries an identifier of a second beam.

In this embodiment of this application, the second beam is determined by using the information about the first geographical location, the beamwidth of the first beam, the ephemeris of the satellite, and the information about the geographical location of the terminal, to resolve a problem that beam maintenance is difficult due to satellite movement, and maintain good quality of communication.

In a possible implementation, the at least one first signal carries a reference signal.

The wireless communication method further includes: measuring quality of the reference signal.

That determining a second beam from the at least one first beam based on the information about the first geographical location carried in each first signal, a beamwidth of each first beam, an ephemeris of the satellite, and information about a second geographical location includes:
determining a first beam corresponding to a second signal as a third beam, where the second signal is a first signal having a reference signal whose quality is greater than a preset quality threshold;
determining a coverage area of the third beam based on a beamwidth of the third beam and information about a first geographical location of the second signal; and
determining the second beam based on the coverage area of the third beam, the ephemeris of the satellite, and the information about the second geographical location. The second beam can provide a long service time, and ensure communication continuity and quality of communication.

In a possible implementation, that determining the second beam based on the coverage area of the third beam, the ephemeris of the satellite, and the information about the second geographical location includes: determining the second beam based on the ephemeris of the satellite and a distance between a center point of the coverage area of the third beam and the second geographical location. A target beam is determined based on a geographical location, to ensure that the target beam can provide a long service time.

In a possible implementation, the wireless communication method further includes: receiving at least one third signal sent by the satellite by using the at least one first beam. The third signal carries information about a first sweeping cycle and/or information about the beamwidth of the at least one first beam, and the information about the first sweeping cycle is used to determine a moment for sending the random access request. Compared with a standard predefined cycle and width, the foregoing two pieces of information can be more flexibly indicated.

In a possible implementation, the information about the first sweeping cycle is a value of the first sweeping cycle or an index of the first sweeping cycle. When the information about the first sweeping cycle is the value of the first sweeping cycle, in a possible implementation, a radio resource control (Radio Resource Control, RRC) signaling directly indicates the value of the first sweeping cycle to the terminal. In another possible implementation, the RRC signaling directly indicates a time interval t between every two first beams and a quantity N of first beams to the terminal. The terminal computes the value of the first sweeping cycle by using T = t * N. In the foregoing two implementations, the terminal can obtain the value of the first sweeping cycle without searching a table. Therefore, implementation complexity is low. When the information about the first sweeping cycle is the index, a preset quantity of bits are used to represent the index, so that the terminal can learn of the value of the first sweeping cycle by querying a mapping relationship table pre-stored in the terminal. This reduces signaling overheads. In addition, the terminal may further receive the value of the first sweeping cycle or the time interval t between every two beams and the quantity N of beams that are broadcast by the satellite by using an SSB. The terminal can obtain the value of the first sweeping cycle without searching the table. Therefore, the implementation complexity is low. Alternatively, the terminal receives the index of the first sweeping cycle broadcast by the satellite, the preset quantity of bits are used to represent the index, and the terminal can learn of the value of the first sweeping cycle by querying the mapping relationship table pre-stored in the terminal. This reduces the signaling overheads.

In a possible implementation, the information about the first geographical location is a first distance difference of the first geographical location relative to a terrestrial reference point. The terrestrial reference point is introduced, and an indicated first distance difference is a differential value of the first geographical location relative to the terrestrial reference point. In an earth-centered, earth-fixed coordinate system, the earth center is used as the reference point, and a coordinate value of the geographical location is an absolute value, which is usually large. The first distance difference is small relative to the absolute value. This reduces the signaling overheads.

The information about the first geographical location is a second distance difference of the first geographical location relative to a geographical location of a center point of a fourth beam. The fourth beam is one of the at least one first beam. The second distance difference is a relative value, and computational complexity may be small. In addition, the method for determining the second distance difference is not limited to setting of the terrestrial reference point.

In a possible implementation, the wireless communication method further includes:
determining a third distance difference between the second geographical location and an edge of the second beam; and
sending first information to the satellite if the third distance difference is less than a preset distance threshold, to trigger the satellite to perform beam re-sweeping, prevent communication interruption and implement beam maintenance. The first information indicates the satellite to perform sweeping based on a second sweeping cycle by using a fifth beam.

According to a second aspect, an embodiment of this application further provides a wireless communication method. The method is applied to a satellite side, and the method includes:
determining at least one first signal;
sending the at least one first signal to a terminal by using at least one first beam, where each first signal corresponds to one first beam, each first signal carries information about a first geographical location, the first geographical location is a geographical location of a center point of the first beam corresponding to each first signal, and the information about the first geographical location is used to determine a second beam from the at least one first beam; and
receiving a random access request sent by the terminal. The random access request carries an identifier of the second beam.

In this embodiment of this application, the first beam sweeps and searches for a location of a terminal, to resolve a problem that a beam direction is inaccurate due to satellite movement, tilt of an antenna panel, or inaccurate ephemeris.

In a possible implementation, the wireless communication method further includes: sending at least one third signal to the terminal by using the at least one first beam. The third signal carries information about a first sweeping cycle and/or information about a beamwidth of the at least one first beam, and the information about the first sweeping cycle indicates the terminal to determine a moment for sending the random access request. The satellite indicates the information about the first sweeping cycle to the terminal in different manners. This reduces signaling overheads.

In a possible implementation, the information about the first sweeping cycle is a value of the first sweeping cycle or an index of the first sweeping cycle. When the information about the first sweeping cycle is the value of the first sweeping cycle, in a possible implementation, the satellite directly indicates the value of the first sweeping cycle to the terminal by using RRC signaling. In another possible implementation, the satellite directly indicates a time interval t between every two first beams and a quantity N of first beams to the terminal by using the RRC signaling. The terminal computes the value of the first sweeping cycle by using T = t * N. In the foregoing two implementations, the terminal can obtain the value of the first sweeping cycle without searching a table. Therefore, implementation complexity is low. When the information about the first sweeping cycle is the index, a preset quantity of bits are used to represent the index, so that the terminal can learn of the value of the first sweeping cycle by querying a mapping relationship table pre-stored in the terminal. This reduces signaling overheads. In addition, the satellite may broadcast the value of the first sweeping cycle or the time interval t between every two beams and the quantity N of beams to the terminal by using an SSB, so that the terminal can obtain the value of the first sweeping cycle without searching the table. Therefore, the implementation complexity is low. Alternatively, the satellite broadcasts the index of the first sweeping cycle to the terminal by using the SSB, and the preset quantity of bits are used to represent the index, so that the terminal can learn of the value of the first sweeping cycle by querying the mapping relationship table pre-stored in the terminal. This reduces the signaling overheads.

In a possible implementation, the information about the first geographical location is a first distance difference of the first geographical location relative to a terrestrial reference point. The terrestrial reference point is introduced, and an indicated first distance difference is a differential value of the first geographical location relative to the terrestrial reference point. In an earth-centered, earth-fixed coordinate system, the earth center is used as the reference point, and a coordinate value of the geographical location is an absolute value, which is usually large. The first distance difference is small relative to the absolute value. This reduces the signaling overheads. Alternatively, the information about the first geographical location is a second distance difference of the first geographical location relative to a geographical location of a center point of a fourth beam. The fourth beam herein is one of the at least one first beam. The second distance difference is a relative value, and computational complexity may be small. In addition, the method for determining the second distance difference is not limited to setting of the terrestrial reference point.

In a possible implementation, the wireless communication method further includes: receiving first information sent by the terminal. The first information indicates the satellite to perform sweeping based on a second sweeping cycle by using a fifth beam. The satellite starts to perform sweeping again by using the fifth beam based on the second sweeping cycle by using the geographical location of the center point of the second beam as a center or using a geographical location of the terminal as a center. This saves a sweeping time, and can implement beam maintenance more quickly.

According to a third aspect, an embodiment of this application provides a communication apparatus. The apparatus includes: a transceiver unit, configured to receive at least one first signal sent by a satellite by using at least one first beam, where each first signal corresponds to one first beam, each first signal carries information about a first geographical location, and the first geographical location is a geographical location of a center point of the first beam corresponding to each first signal; and a processing unit, configured to determine a second beam from the at least one first beam based on the information about the first geographical location carried in each first signal, a beamwidth of each first beam, an ephemeris of the satellite, and information about a second geographical location, where the second geographical location is a geographical location of a terminal.

The transceiver unit is further configured to send a random access request to the satellite. The random access request carries an identifier of the second beam.

In a possible implementation, the at least one first signal carries a reference signal.

The processing unit is further configured to measure quality of the reference signal.

The processing unit includes a first processing module, a second processing module, and a third processing module.

The first processing module is configured to determine a first beam corresponding to a second signal as a third beam. The second signal is a first signal having a reference signal whose quality is greater than a preset quality threshold.

The second processing module is configured to determine a coverage area of the third beam based on a beamwidth of the third beam and information about a first geographical location of the second signal.

The third processing module is configured to determine the second beam based on the coverage area of the third beam, the ephemeris of the satellite, and the information about the second geographical location.

In a possible implementation, the third processing module is specifically configured to determine the second beam based on the ephemeris of the satellite and a distance between a center point of the coverage area of the third beam and the second geographical location.

In a possible implementation, the transceiver unit is further configured to receive at least one third signal sent by the satellite by using the at least one first beam. The third signal carries information about a first sweeping cycle and/or information about the beamwidth of the at least one first beam, and the information about the first sweeping cycle is used to determine a moment for sending the random access request.

In a possible implementation, the information about the first sweeping cycle is a value of the first sweeping cycle or an index of the first sweeping cycle. When the information about the first sweeping cycle is the value of the first sweeping cycle, in a possible implementation, RRC signaling directly indicates the value of the first sweeping cycle to the terminal. In another possible implementation, the RRC signaling directly indicates a time interval t between every two first beams and a quantity N of first beams to the terminal. The terminal computes the value of the first sweeping cycle by using T = t * N. In the foregoing two implementations, the terminal can obtain the value of the first sweeping cycle without searching a table. Therefore, implementation complexity is low. When the information about the first sweeping cycle is the index, a preset quantity of bits are used to represent the index, so that the terminal can learn of the value of the first sweeping cycle by querying a mapping relationship table pre-stored in the terminal. This reduces signaling overheads. In addition, the terminal may further receive the value of the first sweeping cycle or the time interval t between every two beams and the quantity N of beams that are broadcast by the satellite by using an SSB. The terminal can obtain the value of the first sweeping cycle without searching the table. Therefore, the implementation complexity is low. Alternatively, the terminal receives the index of the first sweeping cycle broadcast by the satellite, the preset quantity of bits are used to represent the index, and the terminal can learn of the value of the first sweeping cycle by querying the mapping relationship table pre-stored in the terminal. This reduces the signaling overheads.

In a possible implementation, the information about the first geographical location is a first distance difference of the first geographical location relative to a terrestrial reference point; or the information about the first geographical location is a second distance difference of the first geographical location relative to a geographical location of a center point of a fourth beam. The fourth beam herein is one of the at least one first beam.

In a possible implementation, the processing unit is further configured to determine a third distance difference between the second geographical location and an edge of the second beam. The transceiver unit is further configured to send first information to the satellite if the third distance difference is less than a preset distance threshold. The first information indicates the satellite to perform sweeping based on a second sweeping cycle by using a fifth beam.

It should be noted that, for beneficial effects of the communication apparatus in the third aspect and the possible implementations of the third aspect, refer to beneficial effects of the corresponding method in the first aspect. Details are not described herein again.

According to a fourth aspect, an embodiment of this application provides a communication apparatus. The apparatus includes: a processing unit, configured to determine at least one first signal; and a transceiver unit, configured to send the at least one first signal to a terminal by using at least one first beam. Each first signal carries information about a first geographical location, the first geographical location is a geographical location of a center point of a second beam, the second beam is one of the at least one first beam, and the information about the first geographical location is used to determine the second beam from the at least one first beam.

The transceiver unit is further configured to receive a random access request sent by the terminal. The random access request carries an identifier of the second beam.

In a possible implementation, the transceiver unit is further configured to send at least one third signal to the terminal by using the at least one first beam. The third signal carries information about a first sweeping cycle and/or information about a beamwidth of the at least one first beam, and the information about the first sweeping cycle indicates the terminal to determine a moment for sending the random access request.

In a possible implementation, the information about the first sweeping cycle is a value of the first sweeping cycle or an index of the first sweeping cycle. When the information about the first sweeping cycle is the value of the first sweeping cycle, in a possible implementation, the satellite directly indicates the value of the first sweeping cycle to the terminal by using RRC signaling. In another possible implementation, the satellite directly indicates a time interval t between every two first beams and a quantity N of first beams to the terminal by using the RRC signaling. The terminal computes the value of the first sweeping cycle by using T = t * N. In the foregoing two implementations, the terminal can obtain the value of the first sweeping cycle without searching a table. Therefore, implementation complexity is low. When the information about the first sweeping cycle is the index, a preset quantity of bits are used to represent the index, so that the terminal can learn of the value of the first sweeping cycle by querying a mapping relationship table pre-stored in the terminal. This reduces signaling overheads. In addition, the satellite may broadcast the value of the first sweeping cycle or the time interval t between every two beams and the quantity N of beams to the terminal by using an SSB, so that the terminal can obtain the value of the first sweeping cycle without searching the table. Therefore, the implementation complexity is low. Alternatively, the satellite broadcasts the index of the first sweeping cycle to the terminal by using the SSB, and the preset quantity of bits are used to represent the index, so that the terminal can learn of the value of the first sweeping cycle by querying the mapping relationship table pre-stored in the terminal. This reduces the signaling overheads.

In a possible implementation, the information about the first geographical location is a first distance difference of the first geographical location relative to a terrestrial reference point; or the information about the first geographical location is a second distance difference of the first geographical location relative to a geographical location of a center point of a fourth beam. The fourth beam herein is one of the at least one first beam.

In a possible implementation, the transceiver unit is further configured to receive first information sent by the terminal. The first information indicates the satellite to perform sweeping based on a second sweeping cycle by using a fifth beam.

It should be noted that, for beneficial effects of the communication apparatus in the fourth aspect and the possible implementations of the fourth aspect, refer to beneficial effects of the corresponding method in the second aspect. Details are not described herein again.

According to a fifth aspect, an embodiment of this application provides a wireless communication apparatus, including at least one processor. The processor is configured to execute a program stored in a memory, and when the program is executed, the wireless communication apparatus is enabled to perform: the method in the first aspect and various possible implementations of the first aspect; or the method in the second aspect and various possible implementations.

In a possible implementation, the communication apparatus further includes the foregoing memory. Optionally, the processor and the memory may be integrated together.

In another possible implementation, the memory is disposed outside the apparatus.

According to a sixth aspect, an embodiment of this application provides a computer program product including instructions. When the computer program product runs on a computer, the method in the first aspect and the possible implementations of the first aspect is performed by the computer, or the method in the second aspect and the possible implementations of the second aspect is performed by the computer.

According to a seventh aspect, an embodiment of this application provides a computer-readable storage medium. The computer-readable storage medium stores a computer program, and when the computer program is executed by a processor, the method in the first aspect and the possible implementations of the first aspect is performed, or the method in the second aspect and the possible implementations of the second aspect is performed.

According to an eighth aspect, an embodiment of this application provides a computer program. When the computer program runs on a computer, the method in the first aspect and the possible implementations of the first aspect is performed by the computer, or the method in the second aspect and the possible implementations of the second aspect is performed by the computer.

According to a ninth aspect, an embodiment of this application provides a communication system, including the communication apparatus in the third aspect and the possible implementations of the third aspect, and the communication apparatus in the fourth aspect and the possible implementations of the fourth aspect.

### BRIEF DESCRIPTION OF DRAWINGS

To describe the technical solutions in embodiments of this application more clearly, the following briefly describes the accompanying drawings needed in embodiments. Apparently, the accompanying drawings in the following description show merely some embodiments of this application, and persons of ordinary skill in the art may derive other drawings from these accompanying drawings without creative efforts.
FIG. 1 is a schematic diagram of a communication system in a possible implementation;
FIG. 2 is a schematic diagram of a satellite communication system to which an embodiment of this application is applicable;
FIG. 3 is a schematic flowchart of a wireless communication method according to an embodiment of this application;
FIG. 4 is a schematic diagram of sweeping a terminal by a satellite by using at least one first beam according to an embodiment of this application;
FIG. 5 is a schematic diagram of a time interval t between every two first beams according to an embodiment of this application;
FIG. 6 is a schematic diagram of a terminal at an edge of a second beam according to an embodiment of this application;
FIG. 7 is a schematic diagram of a structure of a communication apparatus according to an embodiment of this application;
FIG. 8 is another schematic diagram of a structure of a communication apparatus according to an embodiment of this application;
FIG. 9 is still another schematic diagram of a structure of a communication apparatus according to an embodiment of this application; and
FIG. 10 is a schematic diagram of a structure of an apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

It should be noted that, in this application, the term "and/or" in this specification describes only an association relationship for describing associated objects and represents that three relationships may exist. For example, A and/or B may represent the following three cases: Only A exists, both A and B exist, and only B exists. In the specification and claims in embodiments of this application, the terms "first", "second", "third", and so on are intended to distinguish between different objects but are not used to describe a particular order of the objects. For example, a first signal, a second signal, a third signal, and the like are used to distinguish between different signals, but are not used to describe a particular order of a target object. In addition, in embodiments of this application, the word "example", "An example is as follows" or "for example" is used to represent giving an example, an illustration, or a description. Any embodiment or design solution described as an "example", "An example is as follows" or "for example" in embodiments of this application should not be explained as having more advantages than another embodiment or design solution. To be precise, the word such as "example" or "for example" is intended to present a related concept in a specific manner. In the description of the embodiment of this application, unless otherwise stated, "multiple" means two or more than two.

In a terrestrial communication system, to ensure continuous and seamless coverage of beams, a terrestrial base station needs to send a plurality of beams in different directions as far as possible, to ensure that any signal can be sent to a needed coverage area by using a narrow but high-gain beam.

In a possible implementation, beam sweeping of new radio (New Radio, NR) is divided into three stages: P1, P2, and P3. The P1 stage is a rough alignment process. The terrestrial base station periodically performs wide beam sweeping, and a swept beam is an area covered by a synchronization signal block (Synchronization Signal Block, SSB). In addition, a terminal performs wide beam sweeping, and obtains an index of a target SSB by measuring quality of a reference signal in the SSB, to determine a wide beam range of the terrestrial base station and a wide beam range of the terminal. Then, the terminal sends a physical random access channel (Physical Random Access Channel, PRACH) to perform random access to the terrestrial base station. The P2 phase is a fine-tuning process of the terrestrial base station. After a radio resource control (Radio Resource Control, RRC) connection is established, the terminal reports a quality measurement report of the reference signal in the target SSB by using a specific wide beam. The terrestrial base station performs narrow beam sweeping in coverage of the target SSB, to determine a narrow beam of the terrestrial base station. The P3 phase is a fine-tuning process of the terminal. The terrestrial base station fixes the narrow beam. The terminal performs narrow beam sweeping, to determine a narrow beam of the terminal. The index of the target SSB is selected in the foregoing measurement manner. If the measurement manner is directly multiplexed in satellite communication, only a signal power condition (quality of the reference signal in the SSB) is considered, and a top-crossing time of the satellite is not considered. That the SSB with best signal quality but a short continuous coverage time is selected for camping may occur. When the terminal needs to perform beam reselection soon, signaling overheads are increased. In addition, because of a characteristic of high-speed movement of the satellite in a non-terrestrial network (Non-terrestrial networks, NTN), beam selection based on measurement of the quality of the reference signal in the SSB cannot meet requirements of different scenarios and different users. In addition, the satellite communication cannot implement wide-narrow beam switching sweeping.

In a possible implementation, because the terminal is disconnected from the terrestrial base station due to the movement of the terminal or another event, beam failure recovery needs to be performed. In a possible implementation, the terminal always maintains a group of backup narrow beam pairs, and when it is detected, within duration of the failure detection timer, that channel quality is continuously lower than a threshold, beam failure is triggered. Generally, the SSB or a periodic channel state information-reference signal (Channel State Information-Reference Signal, CSI-RS) is configured for beam failure detection. A beam failure recovery process is as follows: The terminal notifies the terrestrial base station of a number of the backup narrow beam pair through the PRACH, and switches the beam to the backup narrow beam to initiate a random access request. The terrestrial base station sends a random access response in a new downlink beam direction by using a dedicated search space, and the narrow beam pair is determined after a pairing succeeds. In the foregoing solution, the terminal always maintains the group of backup narrow beam pairs. However, because there is an extremely large delay between the terminal and the satellite, and between the terminal and the terrestrial station, when quality of communication is reduced because a preset beam direction deviates due to satellite movement, coverage of the terminal may not be implemented by using the backup narrow beam pair, and consequently communication is interrupted. In addition, the terminal needs to re-initiate the random access request, and a continuous communication process cannot be ensured.

Consequently, unlike the terrestrial mobile communication network, the satellite communication cannot implement wide-narrow beam switching sweeping. There is the extremely large delay between the terminal and the satellite, and between the terminal and the terrestrial station. Mobility of the satellite may result in the deviation of the preset beam direction, and difficult beam maintenance.

For the foregoing problem, embodiments of this application provide a wireless communication method. The method may be applied to a non-terrestrial network (non-terrestrial network, NTN) system such as an unmanned aerial vehicle, a satellite communication system, or a high altitude platform (high altitude platform station, HAPS) communication. A satellite communication system is used as an example. The satellite communication system may be integrated into an existing mobile communication system, for example, a 4th generation (4th generation, 4G) communication system such as a long term evolution (long term evolution, LTE) system, a 5th generation (5th generation, 5G) communication system such as a new radio (new radio, NR) system, and another future mobile communication system.

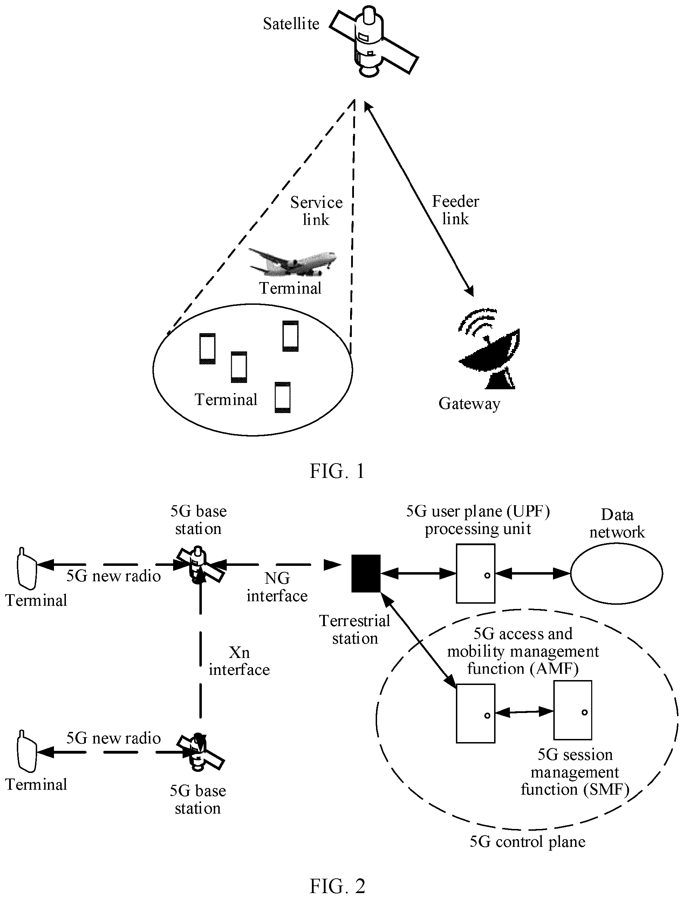

FIG. 1 is an example of a communication system to which an embodiment of this application is applicable. As shown in FIG. 1, a satellite and a gateway (gateway) are network devices, and are configured to provide a communication service for a terminal. The gateway may also be referred to as a terrestrial station, a gateway station, or the like. A link between the satellite and the terminal is referred to as a service link (service link), and a link between the satellite and the gateway is referred to as a feeder link (feeder link).

When the satellite works in a transparent (transparent) mode, the satellite has a relay forwarding function. The gateway has a function of a base station or some functions of a base station. Optionally, the gateway may be considered as a terrestrial base station; or a terrestrial base station and the gateway may be separately deployed.

When the satellite works in a regenerative (regenerative) mode, the satellite has a data processing capability and the function of the base station or some functions of the base station. The satellite can be considered as the base station.

The satellite mentioned in this embodiment of this application may be a satellite base station, or a network side device carried on the satellite. In this application, the satellite base station, the gateway, or the terrestrial base station is referred to as the network device.

The network device in this application may be an evolved NodeB (evolutional Node B, eNB or eNodeB) in LTE, or a base station in a 5G network, a broadband network gateway (broadband network gateway, BNG), an aggregation switch, a non-3rd Generation Partnership Project (3rd generation partnership project, 3GPP) access device, or the like. This is not specifically limited in embodiment of this application. Optionally, the base station in embodiments of this application may include base stations in various forms, for example, a macro base station, a micro base station (also referred to as a small cell), a relay station, an access point, a next-generation base station (gNodeB, gNB), a transmitting and receiving point (transmitting and receiving point, TRP), a transmitting point (transmitting point, TP), a mobile switching center, a device that provides a base station function in a device-to-device (Device-to-Device, D2D), vehicle-to-everything (vehicle-to-everything, V2X), machine-to-machine (machine-to-machine, M2M) communication, and Internet of things (Internet of Things) communication, and the like. This is not specifically limited in embodiment of this application.

The network device may communicate and interact with a core network device, to provide a communication service for the terminal. For example, the core network device is a device in a 5G network core network (core network, CN). The core network provides an interface to a data network for a bearer network, provides communication connection, authentication, management, and policy control, bears data services, and the like for the terminal. The CN may further include network elements such as an access and mobility management network element (Access and Mobility Management Function, AMF), a session management network element (Session Management Function, SMF), an authentication server network element (Authentication Server Function, AUSF), a policy control node (Policy control Function, PCF), and a user plane function (User Plane Function, UPF) network element.

The terminal mentioned in embodiments of this application may be an Internet of Things terminal, and may be specifically user equipment (user equipment, UE), an access terminal, a subscriber unit (subscriber unit), a subscriber station, a mobile station (mobile station), a remote station, a remote terminal, a mobile device, a user terminal (terminal equipment), a wireless communication device, a user agent, or a user apparatus. Alternatively, a terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital processing (personal digital assistant, PDA), a handheld device with a wireless communication function, a computing device, another processing device connected to the wireless modem, a in-vehicle device, a communication device carried on a high altitude aircraft, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation security (transportation safety), a wireless terminal in a smart city (smart city), a wireless terminal in a smart home (smart home), a terminal device in a 5G network or a future communication network, or the like. This is not limited in this application.

Based on different orbit heights, satellite communication systems can be classified into the following three types: a high earth orbit (Geostationary Earth Orbit, GEO) satellite communication system, also referred to as synchronous orbit satellite system, a medium earth orbit (Medium Earth Orbit, MEO) satellite communication system, and a low earth orbit (Low Earth Orbit, LEO) satellite communication system. The GEO satellite, also referred to as a geostationary orbit satellite and with an orbit height of 35,786 km, has main advantages of being stationary relative to the ground and providing a very large coverage area. However, the GEO satellite also has prominent disadvantages. For example, a distance between the GEO satellite and the earth is abnormally long, and a large-diameter antenna is needed; a transmission delay is about 0.5 seconds, which is long, and cannot meet a real-time service requirement; and an orbit resource of the GEO satellite is in shortage, launch costs are high, and coverage cannot be provided for bipolar regions. The MEO satellite has an orbit height with 2,000 to 35,786 km, and can provide global coverage with a small quantity of satellites. However, a transmission delay of the MEO satellite is longer than a transmission delay of a LEO satellite. Therefore, the MEO satellite is mainly used for positioning and navigation. The low earth orbit (LEO) satellite has an orbit height with 300 to 2,000 km. Compared with the MEO satellite and the GEO satellite, the LEO satellite has a lower orbit height, a shorter data transmission delay, less power loss, and lower launch costs.

FIG. 2 shows a schematic diagram of a satellite communication system to which an embodiment of this application is applicable. As shown in FIG. 2, a terminal communicates with a 5G base station through a 5G new radio. 5G base stations are deployed on satellites and connected to the 5G core network on the ground on radio links. In addition, there are radio links between satellites to implement signaling exchange and user data transmission between 5G base stations.

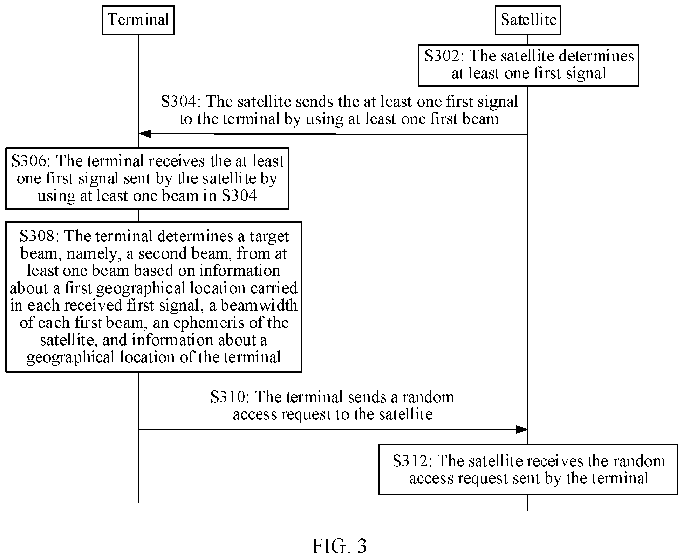

FIG. 3 shows a schematic flowchart of a wireless communication method according to an embodiment of this application. The schematic flowchart includes S302 to S314, to resolve a problem that beam maintenance is difficult due to satellite movement, and maintain good quality of communication.

The following describes in detail a wireless communication method in FIG. 3 according to an embodiment of this application. In this embodiment of this application, the wireless communication method may be applied to a terminal side and a satellite side.

In a possible implementation, the wireless communication method provided in this embodiment of this application is implemented by using the following steps.

S302: A satellite determines at least one first signal.

S304: The satellite sends the at least one first signal to a terminal by using at least one beam. The beam may be referred to as a first beam.

Each first signal corresponds to one first beam. Each first signal carries information about a geographical location of a center point of a first beam corresponding to the first signal, and the information is referred to as information about a first geographical location. The information about the first geographical location is used to determine a target beam, which is referred to as a second beam, from the at least one first beam.

Optionally, the first beam may be an SSB beam.

Optionally, the information about the first geographical location may be a coordinate of the first geographical location, an index of the first geographical location, a difference of the first geographical location relative to a location of a center point of another beam, a difference of the first geographical location relative to a terrestrial reference point, and the like. Details are described in step 308.

In a possible implementation, the first signal may further indicate an ephemeris of the satellite.

In a possible implementation, when sending the at least one first signal to the terminal by using the at least one first beam, the satellite may further send at least one third signal to the terminal by using the at least one first beam. The third signal carries information about a first sweeping cycle and/or information about a beamwidth of the at least one first beam.

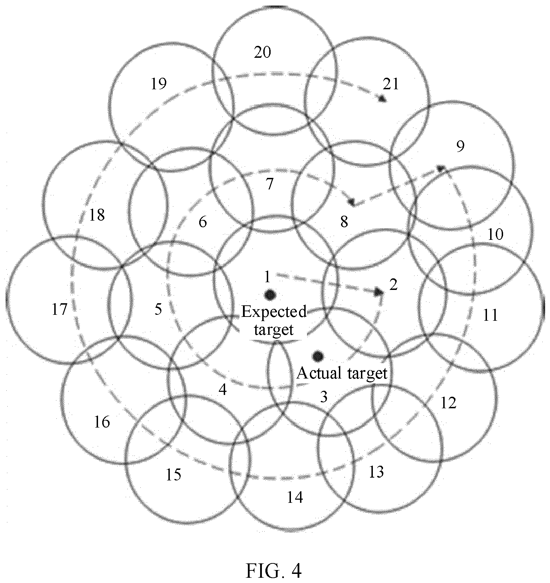

The first sweeping cycle is a sweeping cycle in which the satellite sweeps the terminal by using the at least one first beam. FIG. 4 shows an example in which a satellite sweeps a terminal by using at least one beam. An actual target in FIG. 4 is a geographical location of the terminal in this embodiment of this application, and an expected target is an expected geographical location of the terminal. The terminal is actually located in a coverage area of a beam numbered 3. The satellite performs sweeping for a cycle by using the expected target as a center point, and a quantity of transmitted beams is 21. Refer to FIG. 4. Circles numbered 1 to 21 represent 21 beams.

The information about the first sweeping cycle is used to determine a moment at which the terminal sends a random access request to the satellite in S310. The information about the first sweeping cycle may be a value of the first sweeping cycle, or may be an index of the first sweeping cycle.

The following separately describes the condition that the information about the first sweeping cycle carried in the third signal is the value of the first sweeping cycle or the information about the first sweeping cycle is the index of the first sweeping cycle.

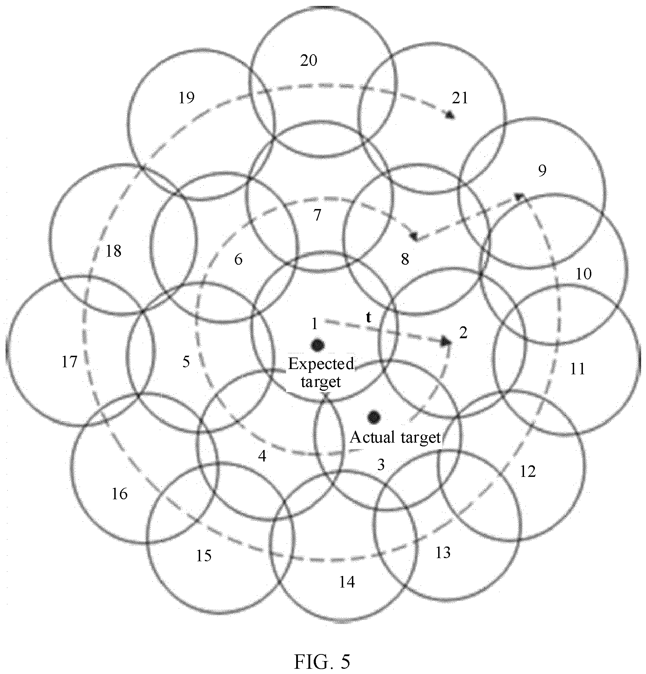

When the information about the first sweeping cycle is the value of the first sweeping cycle, in a possible implementation, the satellite directly indicates the value of the first sweeping cycle to the terminal by using RRC signaling. In another possible implementation, it is assumed that every two beams are at an equal time interval. The value T of the first sweeping cycle may be determined based on a time interval t between every two beams and a quantity N of beams. The value T of the first sweeping cycle is equal to t * N. FIG. 5 is a schematic diagram of a time interval t between every two adjacent beams, that is, a service time of each beam. To be specific, a time interval between a beam numbered 1 and a beam numbered 2 is t, a time interval between the beam numbered 2 and a beam numbered 3 is t, and so on. A time interval between a beam numbered 20 and a beam numbered 21 is also t. In the foregoing two implementations, the terminal can obtain the value of the first sweeping cycle without searching a table. Therefore, implementation complexity is low.

When the information about the first sweeping cycle is the index of the first sweeping cycle, a preset quantity of bits may be used to represent the index, so that the terminal learns of the value of the first sweeping cycle by querying a mapping relationship table based on the index. This reduces signaling overheads.

In a possible implementation, the satellite broadcasts the value of the first sweeping cycle, the time interval t between every two beams, and the quantity N of beams to the terminal by using the SSB, so that the terminal can obtain the value of the first sweeping cycle without searching the table. Therefore, the implementation complexity is low. Alternatively, the satellite broadcasts the index of the first sweeping cycle to the terminal by using the SSB, and the preset quantity of bits are used to represent the index, so that the terminal can learn of the value of the first sweeping cycle by querying the mapping relationship table pre-stored in the terminal. This reduces the signaling overheads. Optionally, the value of the first sweeping cycle, the time interval t between every two beams, the quantity N of beams, or the index of the first sweeping cycle may be directly indicated by using RRC signaling. The RRC signaling is carried in the SSB.

It should be further noted that the value of the first sweeping cycle may be specified in a protocol, and does not need to be notified to the terminal by the satellite. Information about a beamwidth may also be indicated by using a specific value or index. For a specific indication manner, refer to the foregoing indication manner of the first sweeping cycle.

S306: The terminal receives the at least one first signal sent by the satellite by using the at least one beam in S304.

In a possible implementation, when receiving the at least one first signal sent by the satellite by using the at least one beam in S304, the terminal may further receive the at least one third signal sent by the satellite by using the at least one beam. As described in S304, the information about the first sweeping cycle carried in the third signal may be the value of the first sweeping cycle, or may be the index of the first sweeping cycle. The third signal further carries the information about the beamwidth of the at least one first beam.

S308: The terminal determines the target beam, that is, a second beam, from the at least one beam based on the information about the first geographical location carried in each received first signal, the beamwidth of each first beam, the ephemeris of the satellite, and information about the geographical location of the terminal, and the geographical location of the terminal is referred to as a second geographical location.

In a possible implementation, the first signal sent by the satellite in S304 carries a reference signal. After receiving the at least one first signal sent by the satellite in S304, the terminal measures quality of the reference signal carried in the first signal; determines a beam, which is referred to as a third beam, corresponding to a first signal having a reference signal whose quality is greater than a preset quality threshold. For example, the beams corresponding to the first signal having a reference signal whose quality is greater than the preset quality threshold are beams numbered 1, 2, 3, and 4 in FIG. 4. The first signal having a reference signal whose quality is greater than the preset quality threshold is referred to as a second signal. A coverage area of the third beam may be determined based on a beamwidth of the third beam and the information about the first geographical location of the second signal. The second beam is determined based on the ephemeris of the satellite and a distance between a center point of the coverage area of the third beam and the geographical location of the terminal. Specifically, a center point that is within a first preset distance from the geographical location of the terminal and that is of the coverage area of the third beam is determined. A third beam corresponding to a center point of a target coverage area, that is, the beam numbered 3 in FIG. 4, is selected as the second beam along a movement direction of the satellite in the ephemeris. It should be noted that the coordinate of the first geographical location may be learned of by using the following method.

The information about the first geographical location may be the index of the first geographical location. The index may be an identifier of a beam. The identifier of the beam is preconfigured in a one-to-one correspondence with the coordinate of the first geographical location of the beam. For example, as shown in Table 1, the terminal may determine, by using the identifier of the beam, for example, 0, that the coordinate of the first geographical location corresponding to the identifier of the beam is (1, 1, 1). This reduces signaling overheads.

**Table 1**

| Identifier of a beam | Coordinate of a first geographical location |
|---|---|
| 0 | (1, 1, 1) |
| 1 | (2, 2, 2) |
| 2 | (3, 3, 3) |

It should be further noted that different earth surface location ranges may be planned in advance, for example, a longitude and latitude range and a corresponding terrestrial reference point location. Centers of different location ranges may be selected for a terrestrial reference point. The terrestrial reference point may be directly notified by the satellite to the terminal by using the RRC signaling. The satellite notifies the terminal of a first distance difference by using the terrestrial reference point as a reference and in a broadcast manner. The first distance difference is the information about the first geographical location. The terminal may obtain the coordinate of the first geographical location based on the terrestrial reference point and the first distance difference. It may be understood that, the terrestrial reference point is introduced, and the indicated first distance difference is a differential value of the first geographical location relative to the terrestrial reference point. In an earth-centered, earth-fixed coordinate system, the earth center is used as the reference point, and a coordinate value of the geographical location is an absolute value, which is usually large. The first distance difference is small relative to the absolute value. This reduces the signaling overheads.

It should be further noted that the information about the first geographical location may alternatively be a second distance difference of the first geographical location relative to a geographical location of a center point of a fourth beam. The fourth beam is one of the at least one beam. Specifically, in a possible implementation, the satellite may notify the terminal of a coordinate of the geographical location of the center point of the fourth beam and the second distance difference in the broadcast manner. The terminal may determine a coordinate of a geographical location of a center point of a remaining beam based on the coordinate of the geographical location of the center point of the fourth beam and the second distance difference. In another possible implementation, the terminal stores a mapping relationship table. The mapping relationship table (for example, as shown in Table 2) includes the second distance difference and an index of a corresponding first geographical location. In this embodiment of this application, a 1^{st} first geographical location (that is, the geographical location of the center point of the fourth beam) is used as the reference point, and the terminal may determine a coordinate of a remaining first geographical location based on the coordinate of the 1^{st} first geographical location and a second distance difference of the remaining first geographical location relative to the 1^{st} first geographical location. Refer to Table 2. 00 represents a 2^{nd} first geographical location, a second distance difference corresponding to 00 is (1, 2, 3), 01 represents a 3^{rd} first geographical location, a second distance difference corresponding to 01 is (1, 2, 4), 10 represents a 4^{th} first geographical location, a second distance difference corresponding to 10 is (1, 2, 5), 11 represents a 5^{th} first geographical location, and a second distance difference corresponding to 11 is (1, 2, 6). If the satellite broadcasts a coordinate (1, 1, 1) of the 1^{st} first geographical location and the index, for example, 10, in Table 2 to the terminal, the terminal learns, by querying Table 2, that the second distance difference of the 4^{th} first geographical location relative to the 1^{st} first geographical location is (1, 2, 5), to obtain a coordinate (2, 3, 6) of the 4^{th} first geographical location.

**Table 2**

| Index | Sequence number of a first geographical location | Second distance difference |
|---|---|---|
| 00 | II | (1, 2, 3) |
| 01 | III | (1, 2, 4) |
| 10 | IV | (1, 2, 5) |
| 11 | V | (1, 2, 6) |

In the foregoing solution, a relative manner is used. One of the first geographical locations is used as a reference, and the second distance difference of the remaining first geographical location relative to the first geographical location is broadcast. This reduces computation complexity.

It should be further noted that a beamwidth may be learned of in the following manner.

In a possible implementation, information about the beamwidth that is carried in the third signal and that is received by the terminal is a value of the beamwidth or an index of the beamwidth.

In another possible implementation, the information about the first geographical location may further indicate the value of the beamwidth. For example, the information about the first geographical location may be the index, and the index may be the identifier of the beam. The identifier of the beam is preconfigured in a one-to-one correspondence with the value of the beamwidth of the beam and the coordinate of the first geographical location. For example, as shown in Table 3, the terminal may determine, by using the identifier of the beam, for example, 0, that the beamwidth corresponding to the identifier is 400, and the coordinate of the first geographical location is (1, 1, 1). This reduces the signaling overheads.

**Table 3**

| Identifier of a beam | Value of a beamwidth | Coordinate of a first geographical location |
|---|---|---|
| 0 | 400 | (1, 1, 1) |
| 1 | 400 | (2, 2, 2) |
| 2 | 400 | (3, 3, 3) |

It may be understood that the beamwidth learned of through the foregoing possible implementation may be a fixed same beamwidth, or may be different beamwidths. In other words, the beamwidth of the at least one beam received by the terminal may be the same or may be different. For example, in Table 3, when the identifier of the beam is 0, a value of a corresponding beamwidth is 200; when the identifier of the beam is 1, the value of the corresponding beamwidth is 300; and when the identifier of the beam is 2, the value of the corresponding beamwidth is 400. In this embodiment of this application, whether the beamwidth is the same is not specifically limited.

S310: The terminal sends the random access request to the satellite. The random access request carries an identifier of the second beam.

In a possible implementation, the terminal determines, based on the first sweeping cycle, a moment for sending the random access request to the satellite.

When the information about the first sweeping cycle is the value of the first sweeping cycle, in a possible implementation, the terminal receives the value of the first sweeping cycle that is directly sent or broadcast by the satellite by using the RRC signaling. In another possible implementation, the terminal receives the time interval t between every two beams and the quantity N of beams that are directly sent or broadcast by the satellite by using the RRC signaling. The terminal computes the value of the first sweeping cycle by using T = t * N.

When the information about the first sweeping cycle is the index of the first sweeping cycle, the terminal can learn of the value of the first sweeping cycle by querying the mapping relationship table (for example, Table 4, Table 5, Table 6, or Table 7) pre-stored in the terminal.

In a possible implementation, the index is in a one-to-one correspondence with the first sweeping cycle. For example, refer to Table 4. Different satellite altitudes have different speeds, and correspond to different first sweeping cycles. A higher speed indicates a shorter first sweeping cycle. When the index is 00, it indicates that the value of the first sweeping cycle is 20 ms; when the index is 01, it indicates that the value of the first sweeping cycle is 10 ms; and when the index is 10, it indicates that the value of the first sweeping cycle is 5 ms.

In another possible implementation, an index corresponding to the time interval t between every two beams is an index 1 (for example, as shown in Table 5), and an index corresponding to the quantity N of beams is an index 2 (for example, as shown in Table 6). For example, refer to Table 5 and Table 6. When the index 1 is 0 and the index 2 is 0, the value of the first sweeping cycle is that T = t * N = 0.5 ms * 7 = 3.5 ms; when the index 1 is 0 and the index 2 is 1, the value of the first sweeping cycle is that T = t * N = 0.5 ms * 20 = 10 ms; when the index 1 is 1 and the index 2 is 0, the value of the first sweeping cycle is that T = t * N = 1 ms * 7 = 7 ms; and when the index 1 is 1 and the index 2 is 1, the value of the first sweeping cycle is that T = t * N = 1 ms * 20 = 20 ms.

In still another possible implementation, the time interval t between every two beams is in a one-to-one correspondence with the quantity N of beams, and the time interval t and the quantity N correspond to a same index (for example, as shown in Table 7). For example, refer to Table 7. When the index is 0, the value of the first sweeping cycle is that T = t * N = 1 ms * 7 = 7 ms; and when the index is 1, the value of the first sweeping cycle is T = t * N = 0.5 ms * 20 = 10 ms.

**Table 4**

| Index | First sweeping cycle | Satellite system | Altitude range |
|---|---|---|---|
| 00 | 20 ms | GEO | 35,786 km |
| 01 | 10 ms | MEO | 7,000 to 25,000 km |
| 10 | 5 ms | LEO | 300 to 1,500 km |

**Table 5**

| Index 1 | Time interval t between every two beams |
|---|---|
| 0 | 0.5 ms |
| 1 | 1 ms |

**Table 6**

| Index 2 | Quantity N of beams |
|---|---|
| 0 | 7 |
| 1 | 20 |

**Table 7**

| Index | Time interval t between every two beams | Quantity N of beams |
|---|---|---|
| 0 | 1 ms | 7 |
| 1 | 0.5 ms | 20 |

It should be noted that Tables 1 to 7 are merely used as examples, and a form of the table is not specifically limited in this embodiment of this application.

S312: The satellite receives the random access request sent by the terminal, and sends a random access response to the terminal. After random access succeeds, data communication may be performed between the satellite and the terminal.

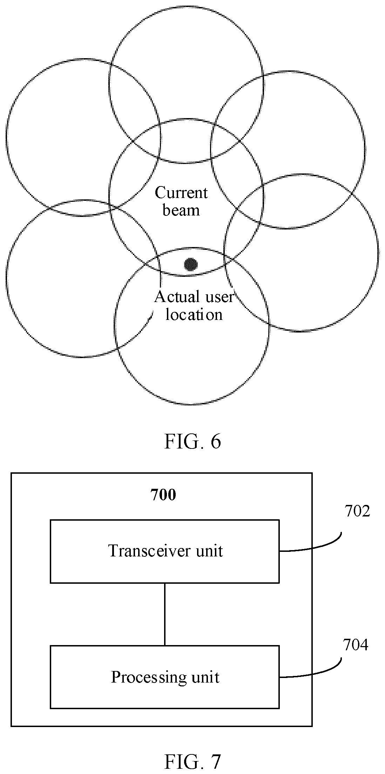

It should be noted that, because the terminal or the second beam may move, when the terminal is located at an edge of the second beam, quality of communication between the terminal and the satellite may deteriorate. In this case, the terminal determines a third distance difference between the second geographical location and the edge of the second beam. If the third distance difference is less than a preset distance threshold, it indicates that the second geographical location is close to the edge of the second beam, and quality of communication between the terminal and the satellite is poor. As shown in FIG. 6, a current beam is the second beam, and an actual user location is the second geographical location. In this case, the terminal sends first information to the satellite. The first information indicates the satellite to perform sweeping by using a fifth beam. Because random access does not need to be performed again, the fifth beam may be a non-SSB beam, for example, may be a CSI-RS beam. A sweeping cycle of the fifth beam may be a second sweeping cycle.

It should be noted that the first information may further carry the identifier of the second beam and a sweeping identifier. The sweeping identifier indicates the satellite to perform re-sweeping, to prevent communication interruption and implement beam maintenance. Alternatively, the first information may carry the coordinate of the geographical location of the terminal and the sweeping identifier. For example, the sweeping identifier may be sweepingflag, and sweepingflag = 1 indicates that quality of communication does not meet a user requirement.

It should be further noted that, in a possible implementation, the second sweeping cycle may reuse the previous first sweeping cycle, for example, 20 ms. In another possible implementation, because the terminal has randomly accessed the satellite, the satellite performs sweeping by using the fifth beam based on the second sweeping cycle to maintain better quality of communication. Therefore, the second sweeping cycle may be configured as a shorter cycle, for example, 5 ms, to avoid an excessively long sweeping time. The satellite may notify the terminal of a value of the second sweeping cycle by using the RRC signaling. In the foregoing solution, a new cycle is customized and configured for each terminal, so that different user requirements in different scenarios are met.

The satellite receives the first information from the terminal, and determines that beam re-sweeping needs to be performed. For example, sweepingflag = 1 carried in the first information, that is, quality of communication does not meet a user requirement. The satellite starts to perform re-sweeping by using the fifth beam based on the second sweeping cycle by using the geographical location of the center point of the second beam as a center or using the geographical location of the terminal as a center. This saves a sweeping time, and can implement beam maintenance more quickly.

It should be noted that the satellite performs re-sweeping by using the geographical location of the center point of the second beam as the center. Because the satellite already knows the center point during re-sweeping, a beam direction does not need to be re-adjusted. This reduces satellite processing complexity. After the satellite performs re-sweeping, a manner of determining the target beam is the same as the manner of determining the target beam in S308. After the satellite performs re-sweeping by using the geographical location of the terminal as the center, a manner of determining the target beam is different from the manner of determining the target beam in S308, and the target beam is determined in the following manner. First, the satellite obtains the information about the geographical location of the terminal in the first information, and the satellite sends at least one fourth signal to the terminal by using the at least one fifth beam by using the geographical location of the terminal as a center. Then, the terminal measures quality of a reference signal in the received fourth signal, and determines, as the target beam, a fifth beam corresponding to a reference signal whose quality is greater than a preset threshold in the fourth signal, so that a beam serving the terminal is found more quickly, and a sweeping time is reduced.

To implement the functions in the foregoing methods provided in embodiments of this application, the terminal device and the network device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on a same concept as the foregoing method embodiment, this application provides a communication apparatus 700. FIG. 7 is a schematic diagram of a structure of a communication apparatus 700 according to an embodiment of this application. The apparatus is configured to implement the method described in the foregoing method embodiments. The communication apparatus may be an apparatus in a terminal device, or an apparatus that can be used in a matching manner with the terminal device. In a possible implementation, the communication apparatus may include modules or units that are in a one-to-one correspondence with the methods/operations/steps/actions performed by the terminal in the foregoing method embodiments. The units may be a hardware circuit, software, or a combination of a hardware circuit and software. In a possible implementation, the apparatus includes a transceiver unit 702 and a processing unit 704.

The transceiver unit 702 is configured to receive at least one first signal sent by a satellite by using at least one first beam. Each first signal corresponds to one first beam, each first signal carries information about a first geographical location, and the first geographical location is a geographical location of a center point of the first beam corresponding to each first signal.

The processing unit 704 is configured to determine a second beam from the at least one first beam based on the information about the first geographical location carried in each first signal, a beamwidth of each first beam, an ephemeris of the satellite, and information about a second geographical location. The second geographical location is a geographical location of a terminal.

The transceiver unit 702 is further configured to send a random access request to the satellite. The random access request carries an identifier of the second beam.

In a possible implementation, the at least one first signal carries a reference signal.

The processing unit 704 is further configured to measure quality of a reference signal.

The processing unit 704 includes a first processing module, a second processing module, and a third processing module.

The first processing module is configured to determine a first beam corresponding to a second signal as a third beam. The second signal is a first signal having a reference signal whose quality is greater than a preset quality threshold.

The second processing module is configured to determine a coverage area of the third beam based on a beamwidth of the third beam and information about a first geographical location of the second signal.

The third processing module is configured to determine the second beam based on the coverage area of the third beam, the ephemeris of the satellite, and the information about the second geographical location.

In a possible implementation, the third processing module is specifically configured to determine the second beam based on the ephemeris of the satellite and a distance between a center point of the coverage area of the third beam and the second geographical location.

In a possible implementation, the transceiver unit 702 is further configured to receive at least one third signal sent by the satellite by using the at least one first beam. The third signal carries information about a first sweeping cycle and/or information about the beamwidth of the at least one first beam, and the information about the first sweeping cycle is used to determine a moment for sending the random access request.

In a possible implementation, the information about the first sweeping cycle is a value of the first sweeping cycle or an index of the first sweeping cycle.

In a possible implementation, the information about the first geographical location is a first distance difference of the first geographical location relative to a terrestrial reference point; or

The information about the first geographical location is a second distance difference of the first geographical location relative to a geographical location of a center point of a fourth beam. The fourth beam is one of the at least one first beam.

In a possible implementation, the processing unit 704 is further configured to determine a third distance difference between the second geographical location and an edge of the second beam.

The transceiver unit 702 is further configured to send first information to the satellite if the third distance difference is less than a preset distance threshold. The first information indicates the satellite to perform sweeping based on a second sweeping cycle by using a fifth beam.

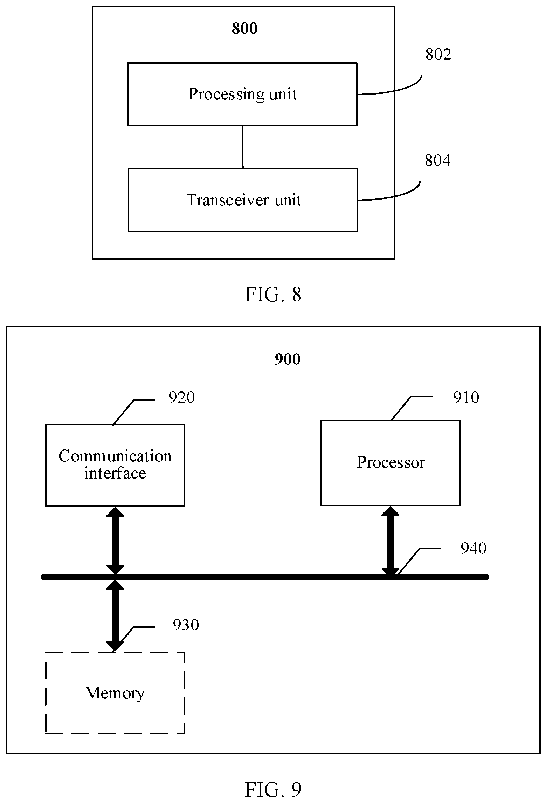

FIG. 8 is a schematic diagram of a structure of a communication apparatus 800 according to an embodiment of this application. The apparatus is configured to implement the method described in the foregoing method embodiments. The communication apparatus may be an apparatus in a network device or an apparatus that can be used in a matching manner with the network device. In a possible implementation, the communication apparatus may include modules or units that are in a one-to-one correspondence with the methods/operations/steps/actions performed by the network device (a satellite) in the foregoing method embodiments. The units may be a hardware circuit, software, or a combination of a hardware circuit and software. In a possible implementation, the apparatus in the schematic diagram of the structure includes a processing unit 802 and a transceiver unit 804.

The processing unit 802 is configured to determine at least one first signal.

The transceiver unit 804 is configured to send the at least one first signal to a terminal by using at least one first beam. Each first signal corresponds to one first beam, each first signal carries information about a first geographical location, the first geographical location is a geographical location of a center point of the first beam corresponding to each first signal, and the information about the first geographical location is used to determine a second beam from the at least one first beam.

The transceiver unit 804 is further configured to receive a random access request sent by the terminal. The random access request herein carries an identifier of the second beam.

In a possible implementation, the transceiver unit 804 is further configured to send at least one third signal to the terminal by using the at least one first beam. The third signal carries information about a first sweeping cycle and/or information about a beamwidth of the at least one first beam, and the information about the first sweeping cycle indicates the terminal to determine a moment for sending the random access request.

In a possible implementation, the information about the first sweeping cycle is a value of the first sweeping cycle or an index of the first sweeping cycle.

In a possible implementation, the information about the first geographical location is a first distance difference of the first geographical location relative to a terrestrial reference point; or
the information about the first geographical location is a second distance difference of the first geographical location relative to a geographical location of a center point of a fourth beam. The fourth beam is one of the at least one first beam.

In a possible implementation, the transceiver unit 804 is further configured to receive first information sent by the terminal. The first information indicates the satellite to perform sweeping based on a second sweeping cycle by using a fifth beam.

Refer to FIG. 9. An embodiment of this application further provides a communication apparatus 900, configured to implement functions of the terminal device and the network device in the foregoing methods. The communication apparatus may be a terminal or a network device, may be an apparatus in a terminal or a network device, or may be an apparatus that can be used in a matching manner with a terminal or a network device. The communication apparatus 900 may be a chip system. In this embodiment of this application, the chip system may include a chip, or may include a chip and another discrete component.

The communication apparatus 900 includes at least one processor 910, configured to implement functions of the terminal and the network device in the method provided in embodiments of this application. The communication apparatus 900 may further include a communication interface 920. In this embodiment of this application, the communication interface may be a transceiver, a circuit, a bus, a module, or a communication interface of another type, and is configured to communicate with another device by using a transmission medium. For example, the communication interface 920 is used by an apparatus in the communication apparatus 900 to communicate with another device.

The processor 910 may perform the functions performed by the processing unit 704 in the communication apparatus 700. The communication interface 920 may be configured to perform the functions performed by the transceiver unit 702 in the communication apparatus 700.

When the communication apparatus 900 is configured to perform an operation performed by the terminal, the communication interface 920 is configured to receive at least one first signal sent by a satellite by using at least one first beam. Each first signal corresponds to one first beam, each first signal carries information about a first geographical location, and the first geographical location is a geographical location of a center point of the first beam corresponding to each first signal. The processor 910 is configured to determine a second beam from the at least one first beam based on the information about the first geographical location carried in each first signal, a beamwidth of each first beam, an ephemeris of the satellite, and information about a second geographical location. The second geographical location is a geographical location of the apparatus 700. The communication interface 920 is further configured to send a random access request to the satellite. The random access request carries an identifier of the second beam.

When the communication apparatus 900 is configured to perform an operation performed by a network device, the processor 910 is configured to determine the at least one first signal; and the communication interface 920 is configured to send the at least one first signal to the terminal by using at least one first beam. Each first signal corresponds to one first beam, each first signal carries the information about the first geographical location, the first geographical location is the geographical location of the center point of the first beam corresponding to each first signal, and the information about the first geographical location is used to determine the second beam from the at least one first beam. The communication interface 920 is further configured to receive the random access request sent by the terminal. The random access request carries an identifier of the second beam.

The communication interface 920 is further configured to perform other receiving or sending steps or operations performed by the terminal and the network device in the foregoing method embodiments. The processor 910 may be also configured to perform corresponding steps or operations, other than receiving and sending, performed by the terminal and the network device in the foregoing method embodiments. Details are not described herein again.

The communication apparatus 900 may further include at least one memory 930, configured to store program instructions and/or data. The memory 930 is coupled to the processor 910. The coupling in this embodiment of this application may be an indirect coupling or a communication connection between apparatuses, units, or modules in an electrical form, a mechanical form, or another form, and is for information exchange between the apparatuses, the units, or the modules. The processor 910 may operate in collaboration with the memory 930. The processor 910 may execute the program instructions stored in the memory 930. In a possible implementation, at least one of the at least one memory may be integrated with the processor. In another possible implementation, the memory 930 is located outside the communication apparatus 900.

This embodiment of this application does not limit a specific connection medium between the communication interface 920, the processor 910, and the memory 930. In this embodiment of this application, in FIG. 9, the memory 930, the processor 910, and the communication interface 920 are connected through a bus 940, and the bus is represented using a thick line in FIG. 9. A connection manner between other components is merely an example for description, and imposes no limitation. The bus may be classified into an address bus, a data bus, a control bus, and the like. For ease of representation, only one thick line is for representing the bus in FIG. 9, but this does not mean that there is only one bus or only one type of bus.

In this embodiment of this application, the processor 910 may be one or more central processing units (Central Processing Units, CPUs). When the processor 910 is one CPU, the CPU may be a single-core CPU, or may be a multi-core CPU. The processor 910 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 930 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

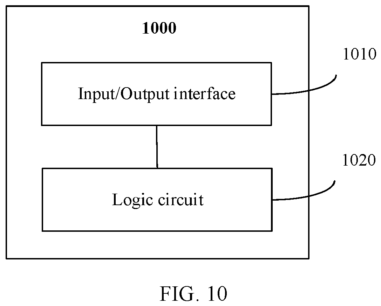

Refer to in FIG. 10. An embodiment of this application further provides an apparatus 1000, configured to implement functions of the terminal and the network device in the foregoing method. The apparatus 1000 may be a communication apparatus or a chip in a communication apparatus. The communication apparatus includes: at least one input/output interface 1010 and a logic circuit 1020. The input/output interface 1010 may be an input/output circuit, or may be referred to as a communication interface. The logic circuit 1020 may be a signal processor, a chip, or another integrated circuit that can implement the method in this application.

The at least one input/output interface 1010 is configured to input or output a signal or data. For example, when the apparatus is a terminal or is used in a terminal, the input/output interface 1010 is configured to: receive at least one first signal sent by a satellite by using at least one first beam; or send a random access request to the satellite. For example, when the apparatus is a network device or is used in a network device, the input/output interface 1010 is configured to: send the at least one first signal to the terminal by using the at least one first beam; or receive a random access request sent by the terminal.

The logic circuit 1020 is configured to perform a part or all of the steps in any one of the methods provided in embodiments of this application. The logic circuit may implement functions implemented by the processing unit 704 in the apparatus 700, the processing unit 802 in the apparatus 800, and the processor 910 in the apparatus 900. For example, when the apparatus is the terminal or is used in the terminal, the apparatus is configured to perform steps performed by the terminal (the communication apparatus 700) in various possible implementations of the foregoing method embodiments. For example, the logic circuit 1020 is configured to determine a second beam from at least one first beam based on information about a first geographical location carried in each first signal, a beamwidth of each first beam, an ephemeris of the satellite, and information about a second geographical location. The second geographical location is a geographical location of the communication apparatus 700. When the apparatus is the network device or is used in the network device, the apparatus is configured to perform the steps performed by the network device (the communication apparatus 800) in the possible implementation methods of the foregoing method embodiments. For example, the logic circuit 1020 is configured to determine the at least one first signal.

When the communication apparatus 1000 is the chip used in the terminal, the chip in the terminal implements functions of the terminal in the foregoing method embodiments. The chip in the terminal receives information from another module (for example, a radio frequency module or an antenna) in the terminal, where the information is sent by the network device to the terminal; or the chip in the terminal sends information to another module (for example, a radio frequency module or an antenna) in the terminal, where the information is sent by the terminal to the network device.

When the communication apparatus 1000 is the chip used in the network device, the chip in the network device implements functions of the network device in the foregoing method embodiments. The chip in the network device receives information from another module (for example, a radio frequency module or an antenna) in the network device, where the information is sent by the terminal to the network device; or the chip in the network device sends information to another module (for example, a radio frequency module or an antenna) in the network device, where the information is sent by the network device to the terminal.

An embodiment of this application provides a computer-readable storage medium. The computer-readable storage medium stores a computer program. When the computer program is executed by a processor, steps of the wireless communication method in FIG. 3 are performed.

Based on a same concept as the foregoing method embodiment, an embodiment of this application further provides a computer program product including instructions. When the computer program product runs on a computer, the computer is enabled to perform the steps of the wireless communication method in FIG. 3.

Based on a same concept as the foregoing method embodiment, an embodiment of this application further provides a computer program. When the computer program runs on a computer, the computer is enabled to perform the steps of the wireless communication method in FIG. 3.

An embodiment of this application further provides a communication system, including a communication apparatus 700 and a communication apparatus 800.

It should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A wireless communication method, applied to a terminal side, and comprising:
receiving at least one first signal sent by a satellite by using at least one first beam, wherein each first signal corresponds to one first beam, each first signal carries information about a first geographical location, and the first geographical location is a geographical location of a center point of the first beam corresponding to each first signal;
determining a second beam from the at least one first beam based on the information about the first geographical location carried in each first signal, a beamwidth of each first beam, an ephemeris of the satellite, and information about a second geographical location, wherein the second geographical location is a geographical location of a terminal; and
sending a random access request to the satellite, wherein the random access request carries an identifier of the second beam.

2. The method according to claim 1, wherein
the at least one first signal carries a reference signal;
the method further comprises: measuring quality of the reference signal; and
the determining a second beam from the at least one first beam based on the information about the first geographical location carried in each first signal, a beamwidth of each first beam, an ephemeris of the satellite, and information about a second geographical location comprises:
determining a first beam corresponding to a second signal as a third beam, wherein the second signal is a first signal having a reference signal whose quality is greater than a preset quality threshold;
determining a coverage area of the third beam based on a beamwidth of the third beam and information about a first geographical location of the second signal; and
determining the second beam based on the coverage area of the third beam, the ephemeris of the satellite, and the information about the second geographical location.

3. The method according to claim 2, wherein the determining the second beam based on the coverage area of the third beam, the ephemeris of the satellite, and the information about the second geographical location comprises:
determining the second beam based on the ephemeris of the satellite and a distance between a center point of the coverage area of the third beam and the second geographical location.

4. The method according to claim 1, wherein the method further comprises:
receiving at least one third signal sent by the satellite by using the at least one first beam, wherein the third signal carries information about a first sweeping cycle and/or information about the beamwidth of the at least one first beam, and the information about the first sweeping cycle is used to determine a moment for sending the random access request.

5. The method according to claim 4, wherein the information about the first sweeping cycle is a value of the first sweeping cycle or an index of the first sweeping cycle.

6. The method according to claim 1, wherein the information about the first geographical location is a first distance difference of the first geographical location relative to a terrestrial reference point; or
the information about the first geographical location is a second distance difference of the first geographical location relative to a geographical location of a center point of a fourth beam, wherein the fourth beam is one of the at least one first beam.

7. The method according to any one of claims 1 to 6, wherein the method further comprises:
determining a third distance difference between the second geographical location and an edge of the second beam; and
sending first information to the satellite if the third distance difference is less than a preset distance threshold, wherein the first information indicates the satellite to perform sweeping based on a second sweeping cycle by using a fifth beam.

8. A wireless communication method, applied to a satellite side, and comprising:
determining at least one first signal;
sending the at least one first signal to a terminal by using at least one first beam, wherein each first signal corresponds to one first beam, each first signal carries information about a first geographical location, the first geographical location is a geographical location of a center point of the first beam corresponding to each first signal, and the information about the first geographical location is used to determine a second beam from the at least one first beam; and
receiving a random access request sent by the terminal, wherein the random access request carries an identifier of the second beam.

9. The method according to claim 8, wherein the method further comprises:
sending at least one third signal to the terminal by using the at least one first beam, wherein the third signal carries information about a first sweeping cycle and/or information about a beamwidth of the at least one first beam, and the information about the first sweeping cycle indicates the terminal to determine a moment for sending the random access request.

10. The method according to claim 9, wherein the information about the first sweeping cycle is a value of the first sweeping cycle or an index of the first sweeping cycle.

11. The method according to claim 8, wherein the information about the first geographical location is a first distance difference of the first geographical location relative to a terrestrial reference point; or
the information about the first geographical location is a second distance difference of the first geographical location relative to a geographical location of a center point of a fourth beam, wherein the fourth beam is one of the at least one first beam.

12. The method according to any one of claims 8 to 11, wherein the method further comprises:
receiving first information sent by the terminal, wherein the first information indicates the satellite to perform sweeping based on a second sweeping cycle by using a fifth beam.

13. A communication apparatus, comprising:
a transceiver unit, configured to receive at least one first signal sent by a satellite by using at least one first beam, wherein each first signal corresponds to one first beam, each first signal carries information about a first geographical location, and the first geographical location is a geographical location of a center point of the first beam corresponding to each first signal; and
a processing unit, configured to determine a second beam from the at least one first beam based on the information about the first geographical location carried in each first signal, a beamwidth of each first beam, an ephemeris of the satellite, and information about a second geographical location, wherein the second geographical location is a geographical location of the apparatus, wherein
the transceiver unit is further configured to send a random access request to the satellite, wherein the random access request carries an identifier of the second beam.

14. The apparatus according to claim 13, wherein
the at least one first signal carries a reference signal;
the processing unit is further configured to measure quality of the reference signal;
the processing unit comprises a first processing module, a second processing module, and a third processing module;
the first processing module is configured to determine a first beam corresponding to a second signal as a third beam, wherein the second signal is a first signal having a reference signal whose quality is greater than a preset quality threshold;
the second processing module is configured to determine a coverage area of the third beam based on a beamwidth of the third beam and information about a first geographical location of the second signal; and
the third processing module is configured to determine the second beam based on the coverage area of the third beam, the ephemeris of the satellite, and the information about the second geographical location.

15. The apparatus according to claim 14, wherein the third processing module is specifically configured to determine the second beam based on the ephemeris of the satellite and a distance between a center point of the coverage area of the third beam and the second geographical location.

16. The apparatus according to claim 13, wherein the transceiver unit is further configured to receive at least one third signal sent by the satellite by using the at least one first beam, wherein the third signal carries information about a first sweeping cycle and/or information about the beamwidth of the at least one first beam, and the information about the first sweeping cycle is used to determine a moment for sending the random access request.

17. The apparatus according to claim 16, wherein the information about the first sweeping cycle is a value of the first sweeping cycle or an index of the first sweeping cycle.

18. The apparatus according to claim 13, wherein the information about the first geographical location is a first distance difference of the first geographical location relative to a terrestrial reference point; or
the information about the first geographical location is a second distance difference of the first geographical location relative to a geographical location of a center point of a fourth beam, wherein the fourth beam is one of the at least one first beam.

19. The apparatus according to any one of claims 13 to 18, wherein
the processing unit is further configured to determine a third distance difference between the second geographical location and an edge of the second beam; and
the transceiver unit is further configured to send first information to the satellite if the third distance difference is less than a preset distance threshold, wherein the first information indicates the satellite to perform sweeping based on a second sweeping cycle by using a fifth beam.

20. A communication apparatus, comprising:
a processing unit, configured to determine at least one first signal; and
a transceiver unit, configured to send the at least one first signal to a terminal by using at least one first beam, wherein each first signal corresponds to one first beam, each first signal carries information about a first geographical location, the first geographical location is a geographical location of a center point of the first beam corresponding to each first signal, and the information about the first geographical location is used to determine a second beam from the at least one first beam, wherein
the transceiver unit is further configured to receive a random access request sent by the terminal, wherein the random access request carries an identifier of the second beam.

21. The apparatus according to claim 20, wherein the transceiver unit is further configured to send at least one third signal to the terminal by using the at least one first beam, wherein the third signal carries information about a first sweeping cycle and/or information about a beamwidth of the at least one first beam, and the information about the first sweeping cycle indicates the terminal to determine a moment for sending the random access request.

22. The apparatus according to claim 21, wherein the information about the first sweeping cycle is a value of the first sweeping cycle or an index of the first sweeping cycle.

23. The apparatus according to claim 20, wherein the information about the first geographical location is a first distance difference of the first geographical location relative to a terrestrial reference point; or
the information about the first geographical location is a second distance difference of the first geographical location relative to a geographical location of a center point of a fourth beam, wherein the fourth beam is one of the at least one first beam.

24. The apparatus according to any one of claims 20 to 23, wherein the transceiver unit is further configured to receive first information sent by the terminal, wherein the first information indicates the apparatus to perform sweeping based on a second sweeping cycle by using a fifth beam.

25. A wireless communication apparatus, comprising at least one processor, wherein the processor is configured to execute a program stored in a memory, and when the program is executed, the wireless communication apparatus is enabled to perform:
the method according to any one of claims 1 to 7; or
the method according to any one of claims 8 to 12.

26. The apparatus according to claim 25, further comprising the memory.

27. A computer program product comprising instructions, wherein when the computer program product runs on a computer, the computer is enabled to perform:
the method according to any one of claims 1 to 7; or
the method according to any one of claims 8 to 12.

28. A computer-readable storage medium, wherein the computer-readable storage medium stores a computer program, and when the computer program is executed by a processor,
the method according to any one of claims 1 to 7 is performed; or
the method according to any one of claims 8 to 12 is performed.

29. A computer program, wherein when the computer program is run on a computer, the computer is enabled to perform:
the method according to any one of claims 1 to 7; or
the method according to any one of claims 8 to 12.

30. A communication system, comprising the apparatus according to any one of claims 13 to 19 and the apparatus according to any one of claims 20 to 24.
